# EUROPÄISCHE PATENTSCHRIFT

(11) **EP 3 063 347 B1**
(45) Veröffentlichungstag und Bekanntmachung des Hinweises auf die Patenterteilung: **09.08.2017**
(21) Anmeldenummer: 15723453.5
(22) Anmeldetag: 06.05.2015
(51) Int. Cl.: B44C 1/22, E04F 15/02, B44C 5/04

(54) **PANEEL MIT RUSTIKALER FASE UND VERFAHREN ZU DESSEN HERSTELLUNG**
PANEL WITH RUSTIC BEVEL AND METHOD FOR PRODUCTION OF SAME
PANNEAU À CHANFREIN RUSTIQUE ET PROCÉDÉ DE FABRICATION DE CELUI-CI

(30) Priorität: 09.05.2014 DE 102014208742
(43) Veröffentlichungstag der Anmeldung: 07.09.2016
(73) Patentinhaber: KAINDL FLOORING GmbH, 5071 Wals (AT)
(72) Erfinder: DÜRNBERGER, Gerhard, A-5204 Strasswalchen (AT); WALLINGER, Andreas, A-5441 Abtenau (AT); KRALLINGER, Rupert, A-5522 St. Martin (AT)
(74) Vertreter: Weickmann & Weickmann PartmbB
(86) Internationale Anmeldenummer: PCT/EP2015/059927
(87) Internationale Veröffentlichungsnummer: WO 2015/169838

(56) Entgegenhaltungen:
- EP-A1- 1 898 024
- CN-A- 103 233 568
- US-A1- 2010 314 368

## Beschreibung

Die Erfindung betrifft ein Paneel zur Verkleidung eines Untergrunds, umfassend eine Sichtfläche, welche von einer Mehrzahl von Seitenrändern begrenzt ist, eine zur Sichtfläche im Wesentlichen parallel verlaufende Anlagefläche, welche im verlegten Zustand zur Anlage an dem Untergrund bestimmt ist, und eine Mehrzahl von zur Sichtfläche und zur Anlagefläche im Wesentlichen orthogonal verlaufenden Seitenflächen, wobei zur Bildung einer Fase am Übergang von der Sichtfläche zu wenigstens einer der Seitenflächen eine Mehrzahl von Vertiefungen ausgebildet ist, welche von der Sichtfläche ausgehen, relativ zur Sichtfläche geneigt verlaufen und in einer der Seitenflächen enden.

Die gattungsbildende CN 103 233 568 A offenbart Paneele, bei denen in eine sich über die gesamte Länge der Seitenfläche erstreckende, die Sichtfläche mit der Seitenfläche verbindende, ebene Schrägfläche bzw. Fase eine Mehrzahl von voneinander getrennten Vertiefungen eingebracht ist, und zwar gemäß einer regelmäßigen Anordnung und mit gleichem Neigungswinkel.

Ferner offenbart die ebenfalls gattungsgemäße US-A-2010/0314368 Paneele, bei welchen im Übergang zwischen der Sichtfläche und der Seitenfläche eine Fase ausgebildet wird, deren Verbindungskante mit der Seitenfläche geradlinig ausgebildet ist, während die Verbindungskante mit der Sichtfläche unregelmäßig gewellt verläuft.

Aus der WO 2006/066776 A2 ist ein Paneel bekannt, dessen gesamte Sichtfläche bis hin zu deren Seitenrändern mittels einer aufwändigen Bearbeitung dreidimensional strukturiert ist.

Und die EP 1 898 024 A1 offenbart Paneele, bei denen am Übergang von der Sichtfläche zu wenigstens einer der Seitenflächen eine Fase ausgebildet ist, die zwei sich über die gesamte Länge der Seitenfläche erstreckende Abschnitte umfasst. Ein erster Abschnitt schließt sich an die Seitenfläche an und ist eben ausgebildet, während der zwischen dem ersten Abschnitt und der Sichtfläche angeordnete zweite Abschnitt gewellt ausgebildet ist.

Vor dem Hintergrund dieses Standes der Technik ist es Aufgabe der vorliegenden Erfindung, Paneele mit verbessertem rustikalem Aussehen bereitzustellen, die in einfacher Weise hergestellt werden können.

Diese Aufgabe wird erfindungsgemäß durch ein Paneel der gattungsgemäßen Art gelöst, bei welchem die Fase ausschließlich von der Mehrzahl von den Vertiefungen gebildet ist, wobei die Vertiefungen wenigstens eine erste Gruppe von Vertiefungen und eine zweite Gruppe von Vertiefungen umfassen, wobei die Vertiefungen der ersten Gruppe alle gemäß einem ersten Neigungswinkel relativ zur Sichtfläche geneigt verlaufen und wobei die Vertiefungen der zweiten Gruppe alle gemäß einem zweiten Neigungswinkel relativ zur Sichtfläche geneigt verlaufen, und wobei der erste Neigungswinkel und der zweite Neigungswinkel voneinander verschieden sind.

Dadurch, dass die Fase ausschließlich von der Mehrzahl von Vertiefungen gebildet ist, werden zwei Effekte erreicht. Zum einen vereinfacht sich die Herstellung, weil der der Einbringung der Vertiefungen vorangehende Schritt der Fertigung einer sich über die gesamte Länge der betrachteten Seitenfläche erstreckenden, ebenen Schrägfläche entfällt. Und zum anderen ergibt sich durch den Entfall der ebenen Schrägfläche ein noch realistischeres rustikales Aussehen der Paneele.

Die wenigstens zwei Gruppen von Vertiefungen werden in die Paneele dadurch eingebracht dass man zwei materialabtragende Werkzeuge verwendet, deren Schneiden mit voneinander verschiedenen Neigungswinkeln am Übergang von der Sichtfläche in die jeweilige Seitenfläche in das Paneel eingreifen. Dies kann in einfacher Weise dadurch realisiert werden, dass die Achsen der beiden materialabtragenden Werkzeuge relativ zum Paneel mit voneinander verschiedenen Neigungswinkeln verlaufen, während die Schneiden der beiden materialabtragenden Werkzeuge relativ zur Achse des zugehörigen Werkzeugs parallel verlaufen. Es ist jedoch auch denkbar, dass die Schneide wenigstens eines Werkzeugs relativ zu dessen Achse geneigt verläuft. In diesem Fall können die Achsen der beiden materialabtragenden Werkzeuge auch parallel verlaufen. Ferner können die materialabtragenden Werkzeuge derart angeordnet sein, dass der Umriss des Schafts des Werkzeugs vollständig außerhalb des Umrisses des an ihm vorbei bewegten Paneels angeordnet ist und nur die von dem Schaft abstehende Schneide zumindest teilweise innerhalb des Umrisses des an dem Werkzeug vorbei bewegten Paneels angeordnet ist.

Der Neigungswinkel der einen Gruppe von Vertiefungen kann zwischen etwa 3° und etwa 35°, vorzugsweise etwa 12°, betragen, während der Neigungswinkel der jeweils anderen Gruppe von Vertiefungen zwischen etwa 5° und etwa 50°, vorzugsweise etwa 23°, betragen kann, wobei die Differenz der beiden Neigungswinkel zwischen etwa 2° und etwa 47° betragen kann, vorzugsweise zwischen etwa 5° und etwa 20°.

Wenigstens eines der materialabtragenden Werkzeuge kann ein Fräser sein. Vorzugsweise sind alle materialabtragenden Werkzeuge Fräser. Der zur Herstellung der ersten Gruppe von Vertiefungen verwendete Fräser kann einen Durchmesser von etwa 10 mm aufweisen und mit einer Drehzahl von etwa 10.000 U/min betrieben werden, während der zur Herstellung der zweiten Gruppe von Vertiefungen verwendete Fräser einen Durchmesser von etwa 10 mm aufweisen und mit einer Drehzahl von etwa 8.500 U/min betrieben werden kann.

Die Vorschubgeschwindigkeit der Paneele kann zwischen etwa 100 m/min und etwa 120 m/min, vorzugsweise etwa 108 m/min, betragen. Ferner kann die Vorschubrichtung der Paneele gegensinnig zur Bewegungsrichtung des mit dem Paneel jeweils in Eingriff stehenden Umfangsabschnitt des materialabtragenden Werkzeugs verlaufen.

Zur Erleichterung der Herstellung wird in Weiterbildung der Erfindung vorgeschlagen, dass die Vertiefungen der ersten Gruppe mit einer im Wesentlichen konstanten, ersten Periodenlänge in das Paneel eingebracht sind, dass die Vertiefungen der zweiten Gruppe mit einer im Wesentlichen konstanten, zweiten Periodenlänge in das Paneel eingebracht sind, und dass die erste Periodenlänge und die zweite Periodenlänge voneinander verschieden sind. Bevorzugt ergibt sich die eine Periodenlänge auch nicht als ganzzahliges Vielfaches der jeweils anderen Periodenlänge. Ist die in Richtung der Längserstreckung der Seitenfläche gemessene Länge der Vertiefungen einer Gruppe kleiner als die Periodenlänge dieser Gruppe, so sind aufeinander folgende Vertiefungen dieser Gruppe mit Abstand voneinander angeordnet.

Herstellungstechnisch kann dies beispielsweise dadurch realisiert werden, dass das Paneel mit einer im Wesentlichen konstanten Vorschubgeschwindigkeit an den materialabtragenden Werkzeugen vorbei bewegt wird, während sich die materialabtragenden Werkzeuge mit im Wesentlichen konstanten, aber voneinander verschiedenen Drehzahlen um ihre Achsen drehen.

Grundsätzlich ist es jedoch auch denkbar, dass die Periodenlänge der ersten Gruppe von Vertiefungen oder/und die Periodenlänge der zweiten Gruppe von Vertiefungen von Vertiefungspaar zu Vertiefungspaar variiert bzw. variieren. Dies erhöht die Variabilität der Anordnung der Vertiefungen weiter und damit auch den realitätsnahen Eindruck des rustikalen Erscheinungsbilds.

Herstellungtechnisch kann dies beispielsweise dadurch erreicht werden, dass das Paneel mit einer im Wesentlichen konstanten Vorschubgeschwindigkeit an den materialabtragenden Werkzeugen vorbei bewegt wird, während sich die materialabtragenden Werkzeuge mit variierenden Drehzahlen um ihre Achsen drehen. Ein weiterer Effekt, der durch die Variation der Drehzahlen der materialabtragenden Werkzeuge erzielt wird, ist die damit einhergehende Variation der Gestalt der Vertiefungen. Erhöht man die Drehzahl eines Werkzeugs, so wird die Gestalt der Vertiefung in Längsrichtung der jeweils betrachteten Seitenfläche gestaucht, da die Schneide des Werkzeugs nach dem Einschneiden in das Paneel schneller wieder außer Eingriff mit diesem gelangt. Entsprechend wird die Gestalt der Vertiefung bei niedrigerer Drehzahl gedehnt. Auch dieser Effekt trägt dazu bei, dass die Variabilität der Anordnung der Vertiefungen und damit auch der realitätsnahe Eindruck des rustikalen Erscheinungsbilds weiter erhöht werden.

Der realistätsnahe Eindruck des rustikalen Erscheinungsbilds der Paneele kann dadurch noch weiter gesteigert werden, dass die Vertiefungen auf mehr als 95%, vorzugsweise auf mehr als 98%, noch bevorzugter auf im Wesentlichen 100%, der Längserstreckung der Seitenfläche einander überlappend angeordnet sind. Hierdurch können Bereiche, in denen die Sichtfläche und die Seitenfläche im Wesentlichen orthogonal aufeinander treffen und dadurch das rustikale Erscheinungsbild stören, weitgehend, wenn nicht gar vollständig, vermieden werden.

Herstellungstechnisch kann dies beispielsweise dadurch erreicht werden, dass eines der materialabtragenden Werkzeuge wenigstens zwei Schneiden aufweist, wobei die Paneel-Vorschubgeschwindigkeit, die Drehzahl des materialabtragenden Werkzeugs, der Relativbewegungssinn des materialabtragenden Werkzeugs und des Paneels im Bereich ihres Eingriffs miteinander und die Eingriffstiefe der Schneiden in das Paneel derart aufeinander abgestimmt sind, dass die Vertiefungen auf mehr als 95%, vorzugsweise auf mehr als 98%, noch bevorzugter auf im Wesentlichen 100%, der Längserstreckung der Seitenfläche einander überlappend angeordnet sind.

Sind die Schneiden des betrachteten materialabtragenden Werkzeugs identisch ausgebildet, so weisen alle von diesem Werkzeug gebildeten Vertiefungen die gleiche Gestalt auf und können somit als zu ein und derselben Gruppe von Vertiefungen gehörend angesehen werden. Durch die erwähnte Abstimmung von Paneel-Vorschubgeschwindigkeit, Werkzeug-Drehzahl, Relativbewegungssinn von Werkzeug und Paneel im Bereich ihres Eingriffs miteinander (das Paneel und die Schneide des Werkzeugs können sich im Bereich ihres Eingriffs relativ zueinander sowohl gleichsinnig als auch gegensinnig bewegen) und Eingriffstiefe der Schneiden in das Paneel können die Vertiefungen unmittelbar aufeinanderfolgend ausgebildet werden, so dass ihre jeweilige Länge gleichzeitig gleich der Periode ihres Aufeinanderfolgens entspricht. Ja es ist sogar möglich, sie einander überlappen zu lassen. In beiden Fällen ist der Abstand zwischen aufeinander folgenden Vertiefungen gleich Null.

Grundsätzlich es jedoch auch denkbar, dass die Schneiden des betrachteten materialabtragenden Werkzeugs voneinander verschieden ausgebildet sind. In diesem Fall bilden die von den weiteren Schneiden gebildeten Vertiefungen wenigstens eine weitere Gruppe von Vertiefungen. Gleichwohl kann durch Abstimmung von Paneel-Vorschubgeschwindigkeit, Werkzeug-Drehzahl, Relativbewegungssinn von Werkzeug und Paneel und Eingriffstiefe der Schneiden in das Paneel auch in diesem Fall erreicht werden, dass die Vertiefungen einander überlappen oder unmittelbar aufeinander folgen, so dass auf der gesamten Längserstreckung der Seitenfläche Vertiefungen vorgesehen sind.

In Weiterbildung der Erfindung kann vorgesehen sein, dass die Vertiefungen einer der Gruppen von Vertiefungen tiefer ausgebildet ist als die Vertiefungen der jeweils anderen Gruppe von Vertiefungen. Herstellungstechnisch kann dies beispielsweise dadurch realisiert werden, dass die wenigstens eine Schneide des der einen Gruppe von Vertiefungen zugeordneten Werkzeugs tiefer in das Paneel eingreift als die wenigstens eine Schneide des der jeweils anderen Gruppe von Vertiefungen zugeordneten Werkzeugs. Beispielsweise kann die wenigstens eine Schneide des der einen Gruppe von Vertiefungen zugeordneten Werkzeugs etwa 0,8 mm tief in das Paneel eingreifen, während die wenigstens eine Schneide des der jeweils anderen Gruppe von Vertiefungen zugeordneten Werkzeugs nur etwa 0,6 mm tief in das Paneel eingreift.

Dies ist von besonderem Vorteil, wenn das zur Herstellung der einen Gruppe von Vertiefungen verwendete Werkzeug mit wenigstens zwei Schneiden ausgebildet ist, um eine, vorzugsweise vollständig abstandsfreie, Aufeinanderfolge von Vertiefungen zu bilden. Durch das tiefere Eingreifen der Schneide(n) des zur Herstellung der jeweils anderen Gruppe von Vertiefungen verwendeten Werkzeugs bleiben die Vertiefungen der einen Gruppe praktisch nur noch in den Zwischenräumen zwischen den Vertiefungen der anderen Gruppe erkennbar. Weist die andere Gruppe von Vertiefungen zudem eine Periodenlänge auf, welche sich von jener der einen Gruppe von Vertiefungen unterscheidet, so variiert das von den Vertiefungen der einen Gruppe verbleibende Erscheinungsbild. Insgesamt ergibt sich somit ein sehr realitätsnahes rustikales Erscheinungsbild der ausschließlich von Vertiefungen gebildeten Fase.

Eine weitere Möglichkeit zur Erhöhung der Realitätsnähe des rustikalen Erscheinungsbilds des Paneels besteht darin, dass die erste Gruppe von Vertiefungen oder/und die zweite Gruppe von Vertiefungen mit variabler Maximaltiefe ausgebildet ist. Hierzu kann der Abstand der zur Herstellung der ersten Gruppe von Vertiefungen oder/und der zweiten Gruppe von Vertiefungen verwendeten materialabtragenden Werkzeuge von dem Paneel während der Bearbeitung variiert werden. Grundsätzlich kann aber auch mit konstantem Abstand gearbeitet werden.

Um verhindern zu können, dass das bei der Bildung der Vertiefungen von den Paneelen abgetragene Material die weitere Bearbeitung der Paneele behindert, wird vorgeschlagen, dass die Paneele bei der Einbringung der Vertiefungen mit der Sichtseite nach unten materialabtragend bearbeitet werden.

In Weiterbildung der Erfindung wird vorgeschlagen, dass das Paneel nach dem Einbringen der Vertiefungen bedruckt wird. Hierdurch kann in einfacher Weise sichergestellt werden, dass sich das Druckbild realitätsnah kontinuierlich auch in die Vertiefungen hinein erstreckt. Für den Fall, dass es erforderlich sein sollte, das Paneel vor dem Bedrucken zu grundieren, um seine Bedruckbarkeit zu verbessern, wird dieses Grundieren vorteilhafterweise ebenfalls erst nach dem Einbringen der Vertiefungen vorgenommen, um auch die Bedruckbarkeit der Vertiefungen verbessern zu können.

Das Bedrucken kann beispielsweise mittels eines digitalen Druckverfahrens vorgenommen werden, vorzugsweise mittels eines Inkjet-Druckverfahrens, wie dies aus dem Stand der Technik an sich bekannt ist.

Die Paneele können ausgehend von einer MDF-Platte (MDF - Medium Density Fiberboard) oder/und einer HDF-Platte (HDF - High Density Fiberboard) oder/und einer OSB-Platte (OSB - Oriented Strand Board) oder/und einer Span-Platte oder/und einer Sperrholz-Platte oder/und Multiplex-Platte gebildet sein. Vorteilhafterweise kann unmittelbar auf die Oberfläche dieser Platte gedruckt werden, wobei diese, wie vorstehend erwähnt, gegebenenfalls zuvor grundiert worden sein kann. Es ist jedoch auch möglich, diese Platte an der die Sichtfläche bildenden Oberfläche mit einer bedruckbaren Schicht oder/und die die Auflagefläche bildende Oberfläche mit einer Gegenzugschicht zu versehen. Die bedruckbare Schicht kann beispielsweise ein wenigstens eine Papierlage umfassendes Laminat oder/und ein Furnier sein oder/und eine Kork oder/und wenigstens ein Textil oder/und wenigstens einen Kunststoff oder/und wenigstens ein Mineral umfassende Schicht sein. Sie kann aber auch aus Linoleum oder/und aus Kautschuk oder/und aus Gummi gebildet sein. Die Gegenzugschicht kann ebenfalls als ein- oder mehrlagige, Kunstharz-getränkte Papierschicht oder/und als eine ein Furnier oder/und Kork oder/und wenigstens ein Textil oder/und wenigstens einen Kunststoff oder/und wenigstens ein Mineral umfassende Schicht oder/und aus Linoleum oder/und aus Kautschuk oder/und aus Gummi ausgebildet sein.

Nach dem Bedrucken kann das Paneel in an sich bekannter Weise mit einer Schutzschicht versehen werden. Diese Schutzschicht ist bevorzugt transparent ausgebildet, damit sie das aufgedruckte Dekor durchscheinen lässt, schützt die Sichtfläche aber vor Abrieb, beispielsweise infolge des Begehens der als Fußbodenpaneele verwendeten Paneele. Zur Bildung der Schutzschicht können die im Stand der Technik bekannten Materialien bzw. Materialzusammensetzungen verwendet werden.

Wie dies an sich bekannt ist, kann auch bei dem erfindungsgemäßen Paneel an wenigstens einer Seitenfläche, vorzugsweise wenigstens einem Paar einander gegenüber liegender Seitenflächen, noch bevorzugter allen Seitenflächen, ein Verbindungselement vorgesehen sein, welches zur Verbindung mit einem identisch ausgebildeten, weiteren Paneel ausgebildet und bestimmt ist. Die Verbindungselemente können dabei mit dem Paneel bevorzugt einstückig ausgebildet sein. Vorzugsweise können die Verbindungselemente Nut-und-Feder-artig ausgebildete Verbindungselemente sein.

Nachzutragen ist noch, dass die erfindungsgemäß ausgebildete Fase nicht nur an einer der Seitenflächen des Paneels ausgebildet sein kann. Vielmehr ist es auch möglich, erfindungsgemäß ausgebildete Fasen an wenigstens einem Paar einander gegenüber liegender Seitenflächen, vorzugsweise zumindest den die beiden Längsseiten des Paneels bildenden Seitenflächen, vorzusehen. Schließlich ist es auch denkbar, erfindungsgemäß ausgebildete Fasen an allen Seitenflächen des Paneels vorzusehen.

Nachzutragen ist ferner, dass der Untergrund beispielsweise ein Boden oder/und eine Wand oder/und eine Decke sein kann. Das Paneel kann also ein Fußbodenpaneel oder/und ein Wandverkleidungspaneel oder/und ein Deckenverkleidungspaneel sein.

Die Erfindung betrifft ferner ein Verfahren zur Herstellung eines mit einer erfindungsgemäß ausgebildeten Fase versehenen Paneels. Bezüglich der Einzelheiten und Weiterbildungsmöglichkeiten dieses Verfahrens, sowie der hiermit erzielbaren Vorteile sei auf die vorstehende Diskussion verwiesen.

Die Erfindung wird im Folgenden anhand der beigefügten Zeichnung an einem Ausführungsbeispiel näher erläutert werden. Es stellt dar:
- Figur 1: eine schematische perspektivische Ansicht zur Erläuterung des Aufbaus einer Vorrichtung zur Herstellung erfindungsgemäßer Paneele bzw. zur Durchführung des erfindungsgemäßen Verfahrens;
- Figur 2: eine schematische perspektivische Ansicht dreier Paneele zur Erläuterung des Fertigung der erfindungsgemäßen Fase; und
- Figur 3: eine weitere schematische Darstellung zur Erläuterung des Fertigung der erfindungsgemäßen Fase.

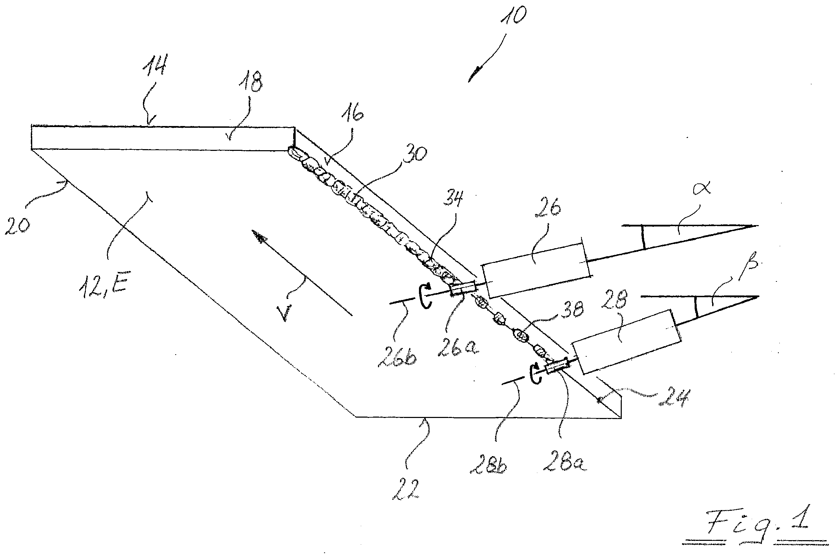

In Figur 1 ist ein erfindungsgemäßes, zur Verkleidung eines Untergrunds, beispielsweise eines Fußbodens, bestimmtes Paneel ganz allgemein mit 10 bezeichnet. Es umfasst eine Sichtfläche 12, die in Figur 1 die untere Fläche ist, da das Paneel 10 gerade in einer invertierten Orientierung bearbeitet wird. Das Paneel 10 umfasst ferner eine zur mittelbaren oder unmittelbaren Auflage auf dem Untergrund bestimmte Auflagefläche 14 und vier Seitenflächen 16, 18, 20 und 22.

In Figur 1 ist dargestellt, wie die die Sichtfläche 12 mit der Seitenfläche 16 verbindende Längskante 24 mittels zweier Fräsaggregate 26 und 28 zur Bildung der erfindungsgemäßen Fase 30 bearbeitet wird, während sich das Paneel 10 in Vorschubrichtung V an ihnen vorbei bewegt. Die Fräswerkzeuge 26a und 28a der Fräsaggregate 26 und 28 sind derart drehangetrieben, dass sich ihr mit dem Paneel 10 in Fräseingriff befindender Umfangsabschnitt gegenläufig zur Vorschubbewegung des Paneels 10 bewegt.

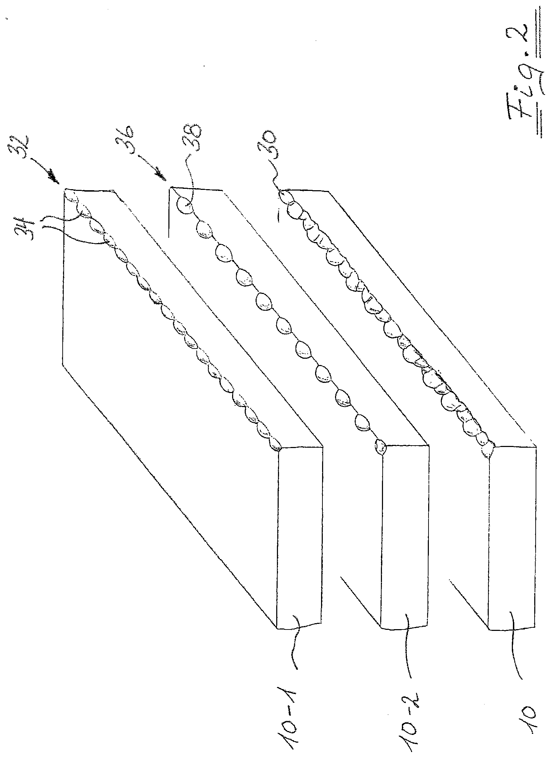

Das Fräswerkzeug 26a des ersten Fräsaggregats 26 verfügt über zwei identisch ausgebildete Schneiden, die eine erste Gruppe 32 von Vertiefungen 34 bilden (siehe Figur 2). Die Vertiefungen 34 schließen dabei derart aneinander an oder überlappen einander derart, dass die von den orthogonal aufeinander stoßenden Flächen 12 und 16 gebildete Längskante 24 am fertig bearbeiteten Paneel 10 an keiner Stelle mehr vorhanden ist. Das Fräswerkzeug 28a des zweiten Fräsaggregats 28 verfügt hingegen lediglich über eine einzige Schneide, die eine zweite Gruppe 36 von Vertiefungen 38 bildet (siehe Figur 2). Die Vertiefungen 38 sind mit Abstand voneinander angeordnet.

Die Schneiden des Fräswerkzeugs 26a verlaufen im Wesentlichen parallel zur Rotationsachse 26b und greifen von der Längskante 24 aus gemessen etwa 0,6 mm tief in das Paneel 10 ein. Ferner schließt die Rotationsachse 26b mit der von der Sichtfläche 12 gebildeten Ebene E einen Winkel α ein, der in dem dargestellten Ausführungsbeispiel etwa 23° beträgt. Die Schneide des Fräswerkzeugs 28a verläuft im Wesentlichen parallel zur Rotationsachse 28b und greift von der Längskante 24 aus gemessen etwa 0,8 mm tief in das Paneel 10 ein. Ferner schließt die Rotationsachse 28b mit der Ebene E einen Winkel β ein, der in dem dargestellten Ausführungsbeispiel etwa 12° beträgt.

Zum besseren Verständnis ist in Figur 2 oben ein Paneel 10-1 dargestellt, in welches mittels des Fräswerkzeugs 26a des ersten Fräsaggregats 26 lediglich die Vertiefungen 34 der ersten Gruppe 32 von Vertiefungen eingebracht worden sind, und darunter ist ein Paneel 10-2 dargestellt, in welches mittels des Fräswerkzeugs 28a des ersten Fräsaggregats 28 lediglich die Vertiefungen 38 der ersten Gruppe 36 von Vertiefungen eingebracht worden sind. In Figur 2 ganz unten ist schließlich das fertig bearbeitete Paneel 10 der Figur 1 dargestellt.

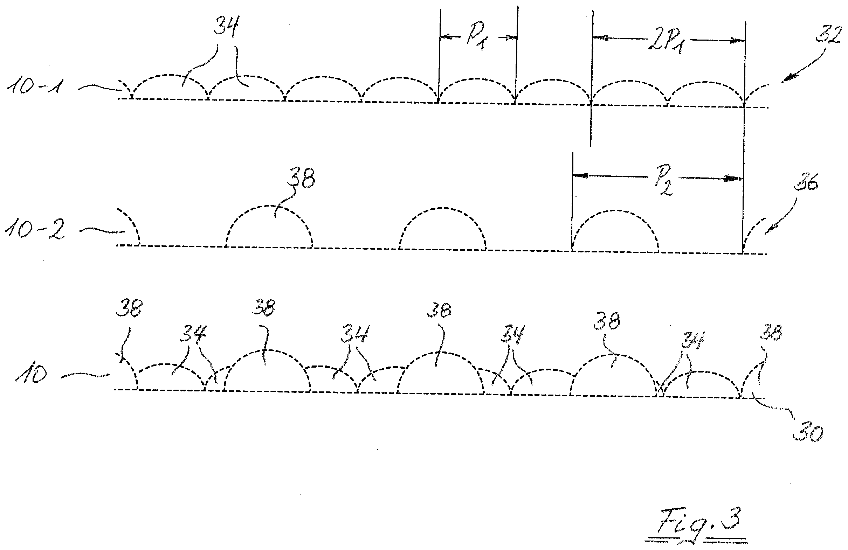

In Figur 3 sind die Vertiefungen 34 und 38 nochmals schematisch in Draufsicht von oben auf die Sichtfläche 12 dargestellt, um zu erläutern, wie durch das Zusammenwirken der beiden Fräsaggregate 26 und 28 eine Fase 30 mit einem realitätsnahen rustikalen Aussehen gebildet wird.

Wie bereits erläutert, sind die Vertiefungen 34 mit einer ersten Periodenlänge P1 angeordnet, während die Vertiefungen 38 mit einer zweiten Periodenlänge P2 angeordnet sind. Die beiden Periodenlängen P1 und P2 sind nicht nur voneinander verschieden (P1 ≠ P2), die Periodenlänge P2 ist auch verschieden von dem Doppelten der Periodenlänge P1 (P2 ≠ 2•P1). Würden sich die beiden Fräswerkzeuge 26a und 28a mit der gleichen Drehzahl drehen, so wäre die Periodenlänge P2 gleich dem Doppelten der Periodenlänge P1 (P2 = 2•P1), da das Fräswerkzeug 26a zwei Schneiden aufweist, während das Fräswerkzeug 28a lediglich über eine einzige Schneide verfügt. Daher lässt man das Fräswerkzeug 26 mit einer Drehzahl rotieren, beispielsweise etwa 10.000 U/min, die sich von jener des Fräswerkzeugs 28a unterscheidet, beispielsweise etwa 8.500 U/min.

In der Überlagerung der Vertiefungen 34 und 38 sind die Vertiefungen 34 infolge des tieferen Eingreifens der Schneide des Fräsewerkzeugs 28a nur noch in den Zwischenräumen zwischen den Vertiefungen 38 erkennbar. Und aufgrund der voneinander verschiedenen Periodenlängen P1 und P2 ergibt sich zwischen den Vertiefungen 38 ein stets unterschiedlicher Ausschnitt aus dem von den Vertiefungen 34 gebildeten Vertiefungsmuster. Dies verstärkt den von den unterschiedlichen Anstellwinkeln der Fräswerkzeuge 26a, 28a erzeugten Effekt und führt im Zusammenwirken mit diesem zu einem unregelmäßigen und somit realitätsnahen rustikalen Erscheinungsbild der Fase 30

## Patentansprüche

1. Paneel (10) zur Verkleidung eines Untergrunds, umfassend:
• eine Sichtfläche (12), welche von einer Mehrzahl von Seitenrändern begrenzt ist,
• eine zur Sichtfläche (12) im Wesentlichen parallel verlaufende Anlagefläche (14), welche im verlegten Zustand zur Anlage an dem Untergrund bestimmt ist, und
• eine Mehrzahl von zur Sichtfläche (12) und zur Anlagefläche (14) im Wesentlichen orthogonal verlaufenden Seitenflächen (16, 18, 20, 22),
wobei zur Bildung einer Fase (30) am Übergang von der Sichtfläche (12) zu wenigstens einer (16) der Seitenflächen eine Mehrzahl von Vertiefungen (34, 38) ausgebildet ist, welche von der Sichtfläche (12) ausgehen, relativ zur Sichtfläche (12) geneigt verlaufen und in der jeweiligen Seitenfläche (16) enden,
**dadurch gekennzeichnet, dass** die Fase (30) ausschließlich von der Mehrzahl von Vertiefungen (34, 38) gebildet ist,
wobei die Vertiefungen wenigstens eine erste Gruppe (32) von Vertiefungen (34) und eine zweite Gruppe (36) von Vertiefungen (38) umfassen,
wobei die Vertiefungen (34) der ersten Gruppe (32) alle gemäß einem ersten Neigungswinkel (α) relativ zur Sichtfläche (12) geneigt verlaufen und wobei die Vertiefungen (38) der zweiten Gruppe (36) alle gemäß einem zweiten Neigungswinkel (β) relativ zur Sichtfläche (12) geneigt verlaufen, und
wobei der erste Neigungswinkel (α) und der zweite Neigungswinkel (β) voneinander verschieden sind.

2. Paneel nach Anspruch 1,
**dadurch gekennzeichnet, dass** die Vertiefungen (34) der ersten Gruppe (32) mit einer im Wesentlichen konstanten, ersten Periodenlänge (P1) in das Paneel (10) eingebracht sind, dass die Vertiefungen (38) der zweiten Gruppe (36) mit einer im Wesentlichen konstanten, zweiten Periodenlänge (P2) in das Paneel (10) eingebracht sind, und dass die erste Periodenlänge (P1) und die zweite Periodenlänge (P2) voneinander verschieden sind.

3. Paneel nach Anspruch 2,
**dadurch gekennzeichnet, dass** die Periodenlänge (P1) der ersten Gruppe (32) von Vertiefungen (34) oder/und die Periodenlänge (P2) der zweiten Gruppe (36) von Vertiefungen (38) von Vertiefungspaar zu Vertiefungspaar variiert.

4. Paneel nach einem der Ansprüche 1 bis 3,
**dadurch gekennzeichnet, dass** die Vertiefungen (34, 38) auf mehr als 95%, vorzugsweise auf mehr als 98%, noch bevorzugter auf im Wesentlichen 100%, der Längserstreckung der jeweiligen Seitenfläche (16) einander überlappend angeordnet sind.

5. Paneel nach einem der Ansprüche 1 bis 4,
**dadurch gekennzeichnet, dass** wenigstens eines der zur Bildung der Vertiefungen (34, 38) verwendeten Werkzeuge (26a, 28a) wenigstens zwei identisch ausgebildete Schneiden aufweist.

6. Paneel nach einem der Ansprüche 1 bis 5,
**dadurch gekennzeichnet, dass** die Vertiefungen (38) einer (36) der Gruppen von Vertiefungen tiefer ausgebildet ist als die Vertiefungen (34) der jeweils anderen Gruppe (32) von Vertiefungen.

7. Paneel nach einem der Ansprüche 1 bis 6,
**dadurch gekennzeichnet, dass** die erste Gruppe (32) von Vertiefungen (34) oder/und die zweite Gruppe (36) von Vertiefungen (38) mit variabler Maximaltiefe ausgebildet ist.

8. Verfahren zur Herstellung eines Paneels (10) zur Verkleidung eines Untergrunds, das Paneel (10) umfassend:
• eine Sichtfläche (12), welche von einer Mehrzahl von Seitenrändern begrenzt ist,
• eine zur Sichtfläche (12) im Wesentlichen parallel verlaufende Anlagefläche (14), welche im verlegten Zustand zur Anlage an dem Untergrund bestimmt ist, und
• eine Mehrzahl von zur Sichtfläche (12) und zur Anlagefläche (14) im Wesentlichen orthogonal verlaufenden Seitenflächen (16, 18, 20, 22),
wobei bei dem Verfahren zur Bildung einer Fase (30) am Übergang von der Sichtfläche (12) zu wenigstens einer (16) der Seitenflächen eine Mehrzahl von Vertiefungen (34, 38) in das Paneel (10) eingebracht werden, welche von der Sichtfläche (12) ausgehen, relativ zur Sichtfläche (12) geneigt verlaufen und in der jeweiligen Seitenflächen (16) enden,
**dadurch gekennzeichnet, dass** die Fase (30) ausschließlich von der Mehrzahl von Vertiefungen (34, 38) gebildet wird,
wobei zwei materialabtragende Werkzeuge (26a, 28a) verwendet werden, deren Schneiden mit voneinander verschiedenen Neigungswinkeln (α, β) am Übergang von der Sichtfläche (12) in die jeweilige Seitenfläche (16) in das Paneel (10) eingreifen.

9. Verfahren nach Anspruch 8,
**dadurch gekennzeichnet, dass** das Paneel (10) mit einer im Wesentlichen konstanten Vorschubgeschwindigkeit an den materialabtragenden Werkzeugen (26a, 28a) vorbei bewegt wird, während sich die materialabtragenden Werkzeuge (26a, 28a) mit im Wesentlichen konstanten, aber voneinander verschiedenen Drehzahlen um ihre Achsen (26b, 28b) drehen.

10. Verfahren nach Anspruch 8,
**dadurch gekennzeichnet, dass** das Paneel (10) mit einer im Wesentlichen konstanten Vorschubgeschwindigkeit an den materialabtragenden Werkzeugen (26a, 28a) vorbei bewegt wird, während sich die materialabtragenden Werkzeuge (26a, 28a) mit variierenden Drehzahlen um ihre Achsen (26b, 28b) drehen.

11. Verfahren nach einem der Ansprüche 8 bis 10,
**dadurch gekennzeichnet, dass** eines (26a) der materialabtragenden Werkzeuge wenigstens zwei Schneiden aufweist, wobei die Paneel-Vorschubgeschwindigkeit, die Drehzahl des materialabtragenden Werkzeugs (26a), der Relativbewegungssinn des materialabtragenden Werkzeugs (26a) und des Paneels (10) im Bereich ihres Eingriffs miteinander und die Eingriffstiefe der Schneiden in das Paneel (10) derart aufeinander abgestimmt sind, dass die Vertiefungen (34, 38) auf mehr als 95%, vorzugsweise auf mehr als 98%, noch bevorzugter auf im Wesentlichen 100%, der Längserstreckung der Seitenfläche einander überlappend angeordnet sind.

12. Verfahren nach einem der Ansprüche 8 bis 11,
**dadurch gekennzeichnet, dass** die wenigstens eine Schneide des der einen Gruppe (36) von Vertiefungen (38) zugeordneten Werkzeugs (28a) tiefer in das Paneel (10) eingreift als die wenigstens eine Schneide des der jeweils anderen Gruppe (32) von Vertiefungen (34) zugeordneten Werkzeugs (26a).

13. Verfahren nach einem der Ansprüche 8 bis 12,
**dadurch gekennzeichnet, dass** der Abstand der zur Herstellung der ersten Gruppe (32) von Vertiefungen (34) oder/und der zweiten Gruppe (36) von Vertiefungen (38) verwendeten materialabtragenden Werkzeuge (26a, 28a) von dem Paneel (10) während der Bearbeitung variiert wird.

14. Verfahren nach einem der Ansprüche 8 bis 13,
**dadurch gekennzeichnet, dass** das Paneel (10) bei der Einbringung der Vertiefungen (34, 38) mit der Sichtfläche (12) nach unten materialabtragend bearbeitet wird.

15. Verfahren nach einem der Ansprüche 8 bis 14,
**dadurch gekennzeichnet, dass** das Paneel (10) nach dem Einbringen der Vertiefungen (34, 38) bedruckt oder/und mit einer Schutzschicht versehen wird.

## Claims

1. Panel (10) for covering a substrate, comprising:
• a visible surface (12) which is delimited by a plurality of side edges,
• a contact surface (14) which extends substantially in parallel with the visible surface (12) and which, when laid, is intended to be in contact with the substrate, and
• a plurality of side surfaces (16, 18, 20 22) which extend substantially orthogonally to the visible surface (12) and to the contact surface (14),
a plurality of depressions (34, 38) being formed at the transition from the visible surface (12) to at least one (16) of the side surfaces in order to form a chamfer (30), which depressions start from the visible surface (12), extend so as to be inclined relative to the visible surface (12), and end in the respective side surfaces (16),
**characterised in that** the chamfer (30) is formed exclusively by the plurality of depressions (34, 38),
the depressions comprising at least one first group (32) of depressions (34) and one second group (36) of depressions (38),
all of the depressions (34) of the first group (32) extending so as to be inclined relative to the visible surface (12) by a first angle of inclination (α) and all of the depressions (38) of the second group (36) extending so as to be inclined relative to the visible surface (12) by a second angle of inclination (β), and
the first angle of inclination (α) and the second angle of inclination (β) being different from one another.

2. Panel according to claim 1, **characterised in that** the depressions (34) of the first group (32) are made in the panel (10) so as to have a substantially constant first interval length (P1), **in that** the depressions (38) of the second group (36) are made in the panel (10) so as to have a substantially constant second interval length (P2), and **in that** the first interval length (P1) and the second interval length (P2) are different from one another.

3. Panel according to claim 2, **characterised in that** the interval length (P1) of the first group (32) of depressions (34) and/or the interval length (P2) of the second group (36) of depressions (38) varies from one pair of depressions to another.

4. Panel according to any of claims 1 to 3, **characterised in that** the depressions (34, 38) are arranged overlapping one another over more than 95 %, preferably more than 98 %, more preferably over substantially 100 % of the longitudinal extension of each side surface (16).

5. Panel according to any of claims 1 to 4, **characterised in that** at least one of the tools (26a, 28a) used for forming the depressions (34, 38) comprises at least two identical cutting edges.

6. Panel according to any of claims 1 to 5, **characterised in that** the depressions (38) of one (36) of the groups of depressions are deeper than the depressions (34) of the other group (32) of depressions in each case.

7. Panel according to any of claims 1 to 6, **characterised in that** the first group (32) of depressions (34) and/or the second group (36) of depressions (38) have/has a variable maximum depth.

8. Method for producing a panel (10) for covering a substrate, the panel (10) comprising:
• a visible surface (12) which is delimited by a plurality of side edges,
• a contact surface (14) which extends substantially in parallel with the visible surface (12) and which, when laid, is intended to be in contact with the substrate, and
• a plurality of side surfaces (16, 18, 20, 22) which extend substantially orthogonally to the visible surface (12) and to the contact surface (14),
a plurality of depressions (34, 38) being formed in the panel (10) during the process of forming a chamfer (30) at the transition from the visible surface (12) to at least one (16) of the side surfaces, which depressions start from the visible surface (12), extend so as to be inclined relative to the visible surface (12), and end in the respective side surfaces (16), **characterised in that** the chamfer (30) is formed exclusively by the plurality of depressions (34, 38),
two material-removing tools (26a, 28a) being used, the cutting edges of which, which have angles of inclination (α, β) that are different from one another, engages in the panel (10) at the transition from the visible surface (12) into the particular side surface (16).

9. Method according to claim 8, **characterised in that** the panel (10) is moved past the material-removing tools (26a, 28a) at a substantially constant feed rate, while the material-removing tools (26a, 28a) rotate about their axes (26b, 28b) at speeds that are substantially constant, yet different from one another.

10. Method according to claim 8, **characterised in that** the panel (10) is moved past the material-removing tools (26a, 28a) at a substantially constant feed rate, while the material-removing tools (26a, 28a) rotate about their axes (26b, 28b) at varying speeds.

11. Method according to any of claims 8 to 10, **characterised in that** one (26a) of the material-removing tools comprises at least two cutting edges, the panel feed rate, the speed of the material-removing tool (26a), the direction in which the material-removing tool (26a) and the panel (10) move relative to one another in the region where they interact, and the depth at which the cutting edges engage in the panel (10) are coordinated such that the depressions (34, 38) are arranged overlapping one another over 95 %, preferably more than 98 %, more preferably over substantially 100% of the longitudinal extension of the side surfaces.

12. Method according to any of claims 8 to 11, **characterised in that** the at least one cutting edge of the tool (28a) associated with one group (36) of depressions (38) engages more deeply in the panel (10) than the at least one cutting edge of the tool (26a) associated with the other group (32) of depressions (34) in each case.

13. Method according to any of claims 8 to 12, **characterised in that** the distance between the material-removing tools (26a, 28a), which are used for producing the first group (32) of depressions (34) and/or the second group (36) of depressions (38), and the panel (10) varies during the machining process.

14. Method according to any of claims 8 to 13, **characterised in that**, when making the depressions (34, 38), the panel (10) is machined, with the visible surface (12) face down, such that material is removed therefrom.

15. Method according to any of claims 8 to 14, **characterised in that**, after the depressions (34, 38) have been made, the panel (10) is printed and/or provided with a protective layer.

## Revendications

1. Panneau (10) pour le revêtement d'un sol, comprenant :
- une surface visible (12) qui est délimitée par une pluralité de bords latéraux,
- une surface d'appui (14) s'étendant sensiblement parallèlement à la surface visible (12), qui est destinée à l'état posé à l'appui contre le sol, et
- une pluralité de surfaces latérales (16, 18, 20, 22) s'étendant sensiblement orthogonalement à la surface visible (12) et à la surface d'appui (14),
dans lequel pour la formation d'un chanfrein (30) sur la transition de la surface visible (12) à au moins une (16) des surfaces latérales, une pluralité de cavités (34, 38) est réalisée, lesquelles partent de la surface visible (12), s'étendent inclinées par rapport à la surface visible (12) et se terminent dans la surface latérale respective (16),
**caractérisé en ce que** le chanfrein (30) est exclusivement formé par la pluralité de cavités (34, 38),
dans lequel les cavités comportent au moins un premier groupe (32) de cavités (34) et un second groupe (36) de cavités (38),
dans lequel les cavités (34) du premier groupe (32) s'étendent toutes inclinées selon un premier angle d'inclinaison (α) par rapport à la surface visible (12) et dans lequel les cavités (38) du second groupe (36) s'étendent toutes inclinées selon un second angle d'inclinaison (β) par rapport à la surface visible (12), et
dans lequel le premier angle d'inclinaison (α) et le second angle d'inclinaison (β) sont différents l'un de l'autre.

2. Panneau selon la revendication 1,
**caractérisé en ce que** les cavités (34) du premier groupe (32) sont introduites avec une première longueur de période (P1) sensiblement constante dans le panneau (10), **en ce que** les cavités (38) du second groupe (36) sont introduites avec une seconde longueur de période (P2) sensiblement constante dans le panneau (10), et **en ce que** la première longueur de période (P1) et la seconde longueur de période (P2) sont différentes l'une de l'autre.

3. Panneau selon la revendication 2,
**caractérisé en ce que** la longueur de période (P1) du premier groupe (32) de cavités (34) et/ou la longueur de période (P2) du second groupe (36) de cavités (38) varie de paire de cavités en paire de cavités.

4. Panneau selon l'une des revendications 1 à 3,
**caractérisé en ce que** les cavités (34, 38) sont agencées par chevauchement l'une sur l'autre sur plus de 95 %, de préférence sur plus de 98 %, de manière encore plus préférée sur sensiblement 100 % de l'étendue longitudinale de la surface latérale respective (16).

5. Panneau selon l'une des revendications 1 à 4,
**caractérisé en ce qu'**au moins un des outils (26a, 28a) utilisés pour la formation des cavités (34, 38) présente au moins deux tranchants réalisés de manière identique.

6. Panneau selon l'une des revendications 1 à 5,
**caractérisé en ce que** les cavités (38) d'un (36) des groupes de cavités sont réalisées plus profondément que les cavités (34) de l'autre groupe respectif (32) de cavités.

7. Panneau selon l'une des revendications 1 à 6,
**caractérisé en ce que** le premier groupe (32) de cavités (34) et/ou le second groupe (36) de cavités (38) est réalisé avec une profondeur maximale variable.

8. Procédé de fabrication d'un panneau (10) pour le revêtement d'un sol, le panneau (10) comprenant :
- une surface visible (12) qui est délimitée par une pluralité de bords latéraux,
- une surface d'appui (14) s'étendant sensiblement parallèlement à la surface visible (12) qui est destinée à l'état posé à l'appui sur le sol, et
- une pluralité de surfaces latérales (16, 18, 20, 22) s'étendant sensiblement orthogonalement à la surface visible (12) et à la surface d'appui (14),
dans lequel pour le procédé de formation d'un chanfrein (30) sur la transition de la surface visible (12) à au moins une (16) des surfaces latérales, une pluralité de cavités (34, 38) sont introduites dans le panneau (10), partent de la surface visible (12), s'étendent inclinées par rapport à la surface visible (12) et se terminent dans les surfaces latérales respectives (16),
**caractérisé en ce que** le chanfrein (30) est exclusivement formé par la pluralité de cavités (34, 38),
dans lequel deux outils (26a, 28a) d'enlèvement de matière sont utilisés, dont les tranchants avec des angles d'inclinaison (α, β) différents l'un de l'autre viennent en prise sur la transition de la surface visible (12) à la surface latérale respective (16) avec le panneau (10).

9. Procédé selon la revendication 8,
**caractérisé en ce que** le panneau (10) est déplacé avec une vitesse d'avance sensiblement constante devant les outils (26a, 28a) d'enlèvement de matière,
alors que les outils (26a, 28a) d'enlèvement de matière tournent avec des vitesses de rotation sensiblement constantes mais différentes l'une de l'autre, autour de leurs axes (26b, 28b).

10. Procédé selon la revendication 8,
**caractérisé en ce que** le panneau (10) est déplacé avec une vitesse d'avance sensiblement constante devant les outils (26a, 28a) d'enlèvement de matière, alors que les outils (26a, 28a) d'enlèvement de matière tournent avec des vitesses de rotation variables autour de leurs axes (26b, 28b).

11. Procédé selon l'une des revendications 8 à 10,
**caractérisé en ce qu'**un (26a) des outils d'enlèvement de matière présente au moins deux tranchants, dans lequel la vitesse d'avance de panneau, la vitesse de rotation de l'outil d'enlèvement de matière (26a), le sens de déplacement relatif de l'outil d'enlèvement de matière (26a) et du panneau (10) dans la zone de leur mise en prise entre eux et la profondeur de mise en prise des tranchants dans le panneau (10) sont adaptés les uns aux autres de telle manière que les cavités (34, 38) soient agencées par chevauchement l'une sur l'autre sur plus de 95 %, de préférence sur plus de 98 %, de manière encore plus préférée sur sensiblement 100 %, de l'étendue longitudinale de la surface latérale.

12. Procédé selon l'une des revendications 8 à 11,
**caractérisé en ce que** l'au moins un tranchant de l'outil (28a) associé à l'un groupe (36) de cavités (38) vient en prise plus profondément dans le panneau (10) que l'au moins un tranchant de l'outil (26a) associé à l'autre groupe respectif (32) de cavités (34).

13. Procédé selon l'une des revendications 8 à 12,
**caractérisé en ce que** la distance des outils (26a, 28a) d'enlèvement de matière pour la fabrication du premier groupe (32) de cavités (34) et/ou du second groupe (36) de cavités (38) par rapport au panneau (10) est variée pendant l'usinage.

14. Procédé selon l'une des revendications 8 à 13,
**caractérisé en ce que** le panneau (10) est usiné par enlèvement de matière lors de l'introduction des cavités (34, 38) avec la surface visible (12) vers le bas.

15. Procédé selon l'une des revendications 8 à 14,
**caractérisé en ce que** le panneau (10) est imprimé après l'introduction des cavités (34, 38) et/ou est pourvu d'une couche de protection.
